# EUROPEAN PATENT SPECIFICATION

(11) **EP 4 316 778 B1**
(45) Date of publication and mention of the grant of the patent: **03.12.2025**
(21) Application number: 23189800.8
(22) Date of filing: 04.08.2023
(51) Int. Cl.: B29C 51/34, B29C 33/36, B65D 47/10, C11D 17/04, B29C 33/00, B29L 31/00

(54) **DEVICE FOR MANUFACTURING DETERGENT PODS**
VORRICHTUNG ZUR HERSTELLUNG VON WASCHMITTELBEHÄLTERN
DISPOSITIF DE FABRICATION DE DOSETTES DE DÉTERGENT

(30) Priority: 04.08.2022 NL 2032680
(43) Date of publication of application: 07.02.2024
(60) Divisional application: 24192315.0
(73) Proprietor: Eme Engel Machinefabriek en Engineering B.V., 8263 BC Kampen (NL)
(72) Inventor: ACHTERKAMP, Barend Jorrit, 8031 WT Zwolle (NL)
(74) Representative: EP&C

(56) References cited:
- EP-B1- 0 842 753
- EP-B1- 1 275 580
- EP-B1- 1 989 037
- WO-A1-2020/109078
- JP-B2- 4 115 258
- US-A1- 2018 148 211
- US-B1- 6 324 819
- US-B2- 9 126 363

## Description

### FIELD OF THE INVENTION

The present invention relates to a device for manufacturing detergent pods. Devices for manufacturing detergent pods are known.

### BACKGROUND OF THE INVENTION

Detergent pods have become increasingly popular over the last number of years, both for the laundry washing and for dishwashing. Detergent pods are generally made from a water soluble material such as PVOH. This material forms the wall of the pod and wraps the detergent.

Detergent pods provide a number of advantages over other kinds of dosage methods, leading to increased convenience for the user. The dose is always controlled and the same. Also, in case of a detergent part having multiple chambers holding different substances, the ratio between the volumes is always controlled and the same. If handled properly, there is no or significantly less contact between the hands of the user and the detergent. This results in less skin irritation. There is also less spilling of detergent.

However, detergent pods according to the prior art suffer from a number of disadvantages. It was found that detergent pods may rupture or leak quite easily. This may happen during fabrication, during storage or transport in a box or other type of container, or during use when a consumer takes the detergent pod from the box and puts the detergent pod in the washing machine or dishwasher. The contents may then spill.

Further, there is always a desire to use less film material in detergent pods, because this may save costs.

Another problem with existing detergent pods is that they tend to develop an undesired undulating region which is sometimes referred to as a 'dolphin nose'. The detergent pod is typically made of two pieces of film material which are connected to one another in an annular connecting area which is typically a flange. The connecting area may have a circular shape, but may also have a different shape such as triangular, square, a kidney shape, a droplet shape,the shape of 'yin' in the yin-yan figure. If the shape has corners, such as the three corners of a triangle, the undulating region may develop at the corner. The undulating region is typically formed by the section of the wall of the pod which extends from the very tip of the corner toward the highest point of the pod, which is typically the center of the dome shape.

The undulating shape is a sequence of a convex area, a concave area and another convex area wherein one of the convex areas is located at a corner in the flange. In other words, the undulating region is a concave area in the wall of the pod situated near a corner and situated between two convex areas. This shape is undesirable and is not present in the mould, but has the tendency to develop anyway after the pod is released from the mould. The undulating region also has the tendency to be relatively large. It was found that even though the undulating region is undesirable, it is quite difficult to avoid the development of an undulating region after the pod is released from the mould.

Another problem with existing detergent pods is that the freedom of form is quite limited. It is generally desirable to manufacture pods having attractive shapes, because this attracts the consumer and results in higher sales. Existing detergent pods are made in various forms, but certain forms cannot be manufactured or are quite difficult to manufacture.

Female moulds as such are well known.

JP 4 115258 B2, EP 0 842 753 B1, US 2018/148211 A1, EP 1 989 037 B1, US 9 126 363 B2, EP 1 275 580 B1 and US 6 324 819 B1 essentially disclose a female mould, the female mould comprising:
- a top surface intended to face upward,
- a mould opening provided in the top surface,
- a mould wall which defines a mould cavity which is accessible via the mould opening, the mould cavity comprising at least one mould compartment, wherein the mould wall comprises a number of pressure openings which allow air or another gas to flow into or out of the mould cavity, wherein the mould wall comprises an overhanging wall part, wherein the mould cavity comprises an undercut volume situated under the overhanging wall part.

WO 2020/109078 A1 discloses a female mould for manufacturing detergent pods, such as for use in a dishwasher or a washing machine, the female mould comprising:
- a top surface intended to face upward,
- a mould opening provided in the top surface,
- a mould wall which defines a mould cavity which is accessible via the mould opening, the mould cavity comprising at least one mould compartment.

### OBJECT OF THE INVENTION

It is an object of the present invention to provide a device and method for manufacturing detergent pods, wherein the detergent pods have less chance of ruptures or leakage.

It is an object of the present invention to manufacture detergent pods with less film material and consequently at less costs.

It is an object of the present invention to provide a device and method for manufacturing detergent pods with no undulating regions (dolphin noses) or significantly smaller undulating regions.

It is an objective to provide a simple construction of the female mould, in particular without moving parts

### SUMMARY OF THE INVENTION

In order to achieve at least one object, the invention provides a female mould for manufacturing detergent pods, in accordance with claim 1.

In the present invention it was recognized that in production methods of detergent pods of the prior art, the film material (called first film material) which is drawn into the mould cavity stretches in a non-uniform manner. As a result, the wall thickness varies significantly over the surface area of the detergent pod and the film material may be relatively thin in one area compared to another area. Because of the local variations in wall thickness, a relatively thick film material is to be used. Only in this way can it be prevented that the wall of the detergent pod becomes too thin locally. This results in relatively high costs. It was further recognized that the stretching can be made more uniform by changing the shape of the cavity defined by the mould wall, namely by providing an undercut volume. With the present invention the strain (or stretch) of the first film material is distributed more evenly over the first pod wall, resulting in a more evenly distributed wall thickness of the first pod wall. This allows the use of a thinner film material which results in a cost saving. Alternatively, for a same film material the risk of rupture of the detergent pod may be reduced.

The present invention also results in detergent pods having no or significantly smaller dolphin noses.

The pressure openings may be in fluid communication with a pressure device configured for providing underpressure and/or overpressure in the mould cavity. The pressure device may be configured to alternately provide underpressure and overpressure in the mould cavity. The pressure device may directly be in fluid communication with the pressure openings. Alternatively, the first film material may be pushed into the mould cavity by a pushing device. Alternatively or additionally, a pressure/suction cup may be applied over the first film material. The pressure/suction cup may apply overpressure on the first film material to push the first film material into the mould cavity. In these embodiments, the pressure openings allow the air or other gas underneath the film material to flow out of the mould cavity when the first film material is deformed into the mould cavity. This allows the first film material to adopt the shape of the mould cavity.

In some embodiments, the undercut volume is at least 5 percent, in particular at least 10 percent, more in particular at least 20 percent, and even more in particular at least 30 percent, of a total volume Vₜₒₜ of the mould cavity. It was found in the present invention that there is a relation between the size of the undercut volume and the distribution of the wall thickness. A greater undercut volume results in a more even wall thickness.

In some embodiments, a maximum cross-sectional plane (Pₘₐₓ) is a plane which is parallel to the top surface and in which plane the mould cavity has a maximum cross-sectional area (Aₘₐₓ), and wherein a mould opening (25) has a cross-sectional area (Aₒₚ), and wherein Aₘₐₓ divided by Aₒₚ is greater than 1,05, in particular greater than 1,1, more in particular greater than 1,2, and most in particular greater than 1,4. A greater size of the undercut volume relative to the mould opening results in a more evenly distributed wall thickness.

In some embodiments, a maximum cross-sectional plane (Pₘₐₓ) is a plane which is parallel to the top surface and in which plane the mould cavity has a maximum cross-sectional area (Aₘₐₓ), and wherein the maximum cross-sectional plane is located at a first distance (Dis₁) from the top surface, wherein said first distance (Dis₁) is smaller than 20 percent of a maximum depth (Dₘₐₓ) of the mould cavity.

In some embodiments, the maximum cross-sectional area plane (Pₘₐₓ) is located at the first distance (Dis₁) from the top surface, wherein said first distance (Dis₁) is smaller than 20 percent of a maximum diameter of the mould cavity. The plane with the maximum cross-sectional area Pₘₐₓ is relatively close to the top surface. This results in a more evenly distributed wall thickness.

In some embodiments, when viewed in a downward direction (Dir₁) a cross-sectional area of the mould cavity starts to widen at a start depth (Dₛ) from the mould opening, wherein the start depth is smaller than 20 percent, in particular smaller than 10 percent, of a maximum diameter of the mould cavity. In other words, the undercut volume may be located relatively close to the top surface. It was found that this improves an even distribution of the wall thickness of the first film material in the formed detergent pod. In some embodiments, the start depth is smaller than 10 percent of the maximum depth (Dₘₐₓ) of the mould.

In some embodiments, an equal plane P_{eq} is defined as a plane which is parallel to the top surface and in which a cross-sectional surface area (A_{eq}) of the mould cavity is the same as the surface area (Aₒₚ) of the mould opening and wherein the equal plane (P_{eq}) is located at an equal depth (D_{eq}) below the top surface, and wherein the equal depth (D_{eq}) is greater than 30 percent of the maximum depth (Dₘₐₓ), more in particular greater than 50 percent. The undercut volume spans a considerable distance of the entire depth. It was found that this improves the even distribution of the wall thickness.

In some embodiments, at least a portion of the overhanging wall part is oriented at an angle (α) relative to the top surface of less than 80 degrees, in particular less than 75 degrees. It was found that in this way the film material does not contact this portion when the film material is drawn into the mould cavity and that this advantageously improves the evenness of the wall thickness.

In some embodiments, an overhang distance (Dₒ) is defined as the maximum horizontal distance between an edge of the top surface and the outermost part of the mould wall, wherein the overhang distance is at least 3 percent of the maximum diameter of the mould cavity and/or wherein the overhang distance is at least 3,5 percent of a maximum diameter of the opening. A significant overhang distance improves an even distribution of the wall thickness.

In some embodiments, at least a portion of the overhanging wall part is curved in two perpendicular planes of curvature. This adds to an evenly distributed wall thickness because a curvature in two planes of curvature results in a shape with no or less corners in which the film material can locally strain significantly more than in other areas .

In some embodiments, a lower half of the mould wall does not have any areas having a radius of curvature (R1) smaller than 20 percent of a maximum diameter (99) of the mould cavity. Areas with a small radius of curvature result in an uneven distribution of the wall thickness, which this embodiment advantageously avoids.

In some embodiments, the lower half of the cavity wall defines an inverted dome shape. The inverted dome shape is located lower than the undercut volume. The undercut volume was found to work very effective in combination with the inverted dome shape.

In some embodiments, the undercut volume goes over in the inverted dome shape.

In some embodiments, the lower half of the mould wall is smooth and free of corners and sharp transitions in orientation. This results in a more evenly distributed wall thickness and reduces the chance of bridging. It is noted that the pressure openings are excluded from this definition, because the pressure openings are typically so small that they do not create bridging problems or issues with an uneven distribution of the wall thickness.

In some embodiments, the overhanging wall part extends around at least 70 percent of a circumference of the mould cavity, more in particular around at least 90 percent of the circumference of the mould cavity. This allows the film to stretch more evenly, resulting in a more evenly distributed wall thickness.

In some embodiments, the female mould comprises two, three, four, five, six, seven or eight mould compartments, wherein the mould wall comprises an outer mould wall and one or more partition walls which separate the mould compartments from one another. The undercut volume also works for a detergent pod having multiple mould compartments.

In some embodiments, the female mould comprises a lower mould part and an upper mould part which are not integral but are separate parts which are connected to one another, wherein the upper mould part is connected to the lower mould part, wherein the upper mould part comprises the overhanging wall part, and wherein in particular the lower mould part does not comprise an overhanging wall part. It was found that this provides an easy construction of the female mould

In some embodiments, the female mould comprise a base part which defines a pressure/under pressure chamber and a cavity part which defines the mould cavity, wherein the cavity part is replaceable. The base part can be permanent. The replaceable cavity part allows a relatively easy exchange of the cavity part by another cavity part having a different shape of the mould cavity.

In some embodiments, the mould cavity has a volume of between 7 and 40 millilitres, more in particular between 10 and 30 millilitres. These sizes allow usable portions of detergent. When the mould cavity has multiple compartments separated by partition walls, the individual compartment may have a volume of 0,2 - 30 ml.

The female mould is not configured to be opened in use and not configured as a split mould. This is contrary to some moulds of the prior art. This advantageously allows a simple construction of the female mould, in particular without moving parts.

The present invention further relates to a device for manufacturing detergent pods, the device comprising:
- a rotary drum or endless belt,
- a plurality of female moulds according to the invention arranged in the rotary drum or endless belt,
- one or more pressure devices configured for first providing underpressure and subsequently providing overpressure at the pressure openings of each female mould,
- a first film supply device configured for supplying a first film material on the top surface of each female mould, the first film material being intended to be drawn into the female moulds by the underpressure, thereby forming a pod cavity,
- a detergent supply device configured for at least partially filling each pod cavity with a detergent,
- a second film supply device configured for placing a second film material onto the first film material (and over the detegent),
- a connecting device configured for connecting the second film material to the first film material in each connecting area which extends around the mould opening of each female mould,
- a separating device configured for separating the formed detergent pods from one another.

With the device according to the present invention, multiple female moulds according to the present invention can be used simultaneously for producing detergent pods.

In some embodiments, the one or more pressure devices is/are configured for creating overpressure at the pressure openings in order to eject the formed pods from the mould cavities. Because the moulds have an overhanging wall part and an undercut volume it will be more difficult to eject the detergent pods. However, it was found that the pods are resilient enough to allow ejection with overpressure.

In some embodiments, the device does not comprise any other means for discharging the formed pods from the moulds than the pressure device. This simplifies the overall design.

In some embodiments, the device comprises a control unit configured to control the various parts of the device to carry out the following cycle:
- positioning the first film material on the top surface with the first film supply device,
- creating underpressure at the pressure openings with the pressure device and drawing the first film material into the mould cavity until the first film material contacts at least a portion of the mould wall of each female mould, thereby forming at least one pod cavity,
- at least partially filling the pod cavity with a first detergent by the detergent supply device,
- positioning the second film material on the first film material with the second film supply device,
- connecting the second film material to the first film material with the connecting device in a connecting area which extends at least around the circumference of the mould opening,
- cutting the first and second film around the connecting area with the cutting device, thereby forming the detergent pods,
- providing overpressure at the pressure openings with the pressure device, and discharging the formed detergent pods from the female moulds.

With the cycle, the detergent pods can be effectively made and ejected from the female moulds.

The present invention further relates to a method of manufacturing a detergent pod, the method comprising:
- positioning a first film material on the top surface of a female mould according to the invention,
- moving the first film material into the mould cavity by deforming the first film material until the first film material contacts at least a portion of the mould wall of the female mould, thereby forming a pod cavity, and
- at least partially filling the pod cavity with a first detergent,
- positioning the second film material onto the first film material,
- connecting the second film material to the first film material in a connecting area around the mould opening with the connecting device,
- discharging the formed detergent pod from the female mould.

The advantages of the method are the same as the advantages discussed for the female mould.

In an embodiment, the method comprises providing a first pressure difference over the first film material in order to deform the first film material and move the first film material into the mould. The first pressure difference may be applied by applying underpressure in the female mould cavity, but may also be applied by applying overpressure on the opposite side of the first film material.

It is also possible that a combination of pushing with a pushing device and a first pressure difference is used. The first film material will then be pushed into the mould cavity by the pushing device. This will cause an initial deformation of the first film material. Once the first film material is inside the female mould cavity, the first pressure difference can be applied, causing a further deformation. Alternatively, the pushing device and the pressure difference may be used simultaneously.

In an embodiment, the method comprises providing a second pressure difference over the formed detergent pod to discharge the formed detergent pod from the female mould. A pressure difference was in particular found to work well for the discharging of the formed pod, because the pod is somewhat resilient and can deform somewhat to come out the mould cavity from underneath the undercut. If the first pressure difference is used, the second pressure difference will be opposite the first pressure difference. Overpressure was found to work well, but is it also conceivable that suction cups are placed over the female moulds to such the detergent pods from the female mould cavities.

The use of the second pressure difference can be regarded as independent from the use of the first pressure difference, although there is an advantage in using both. The advantage is that the first and second pressure difference can be applied by the same pressure applying system.

In some embodiments, the first film material does not contact the entire mould wall prior to filling the pod cavity with detergent and in particular does not contact the entire overhanging wall part. It was found that this results in a relatively evenly distributed wall thickness.

In some embodiments, the first film material first contacts a bottom of the mould cavity and subsequently contacts at least a portion of the overhanging wall part. This allows a relatively even stretch of the first film material and consequently a relatively evenly distributed wall thickness.

In some embodiments, the first film material forms a first pod wall which forms a dome shape and wherein the first pod wall has a wall thickness which locally varies over the area of the first pod wall, wherein a thickest portion of the first pod wall has a maximum wall thickness (Thmax), and wherein a thinnest portion of the first pod wall has a minimum wall thickness of (Thmin) and wherein the minimum wall thickness is greater than 14 percent of the maximum wall thickness, in particular greater than 18 percent of the maximum wall thickness. These were found to be realistic wall thicknesses for the detergent pods of the present invention. Because the minimum wall thickness is relatively great compared to the maximum wall thickness, less material is required.

In some embodiments, the first pod wall forms a dome shape, wherein the first piece of film material has a wall thickness which locally varies, wherein a dome wall thickness (Th_{dome}) of the first pod wall in a central area of the dome shape is at least 14 percent of a flange wall thickness (Th_{flange}) of the first pod wall at a flange, and in particular at least 18 percent of a flange wall thickness (Th_{flange}) of the first pod wall at the flange.

In some embodiments, the first and second film material are water-soluble and are in particular made from PVOH, and wherein the first film material and/or second film material is wetted with a liquid supply device prior to connecting the second film material to the first film material.

In some embodiments, prior to forming the pod cavity, the first film material has a thickness of 80 - 95µm, more in particular between 86 and 92µm, and wherein the second film material is thinner than the first film material.

In some embodiments, prior to forming the pod cavity, the first film material has an first average thickness, after forming the pod cavity, the first film material forms a first pod wall which forms a dome shape and has an second average thickness, and a stretch ratio of the first average thickness / second average thickness is smaller than or equal to 2,3..

The present invention further relates to a detergent pod, comprising:
- a first piece of a first film material forming a first pod wall, and
- a second piece of a second film material forming a second pod wall,

wherein the first and second piece are connected to one another at least along an annular connecting area, the annular connecting area forming a flange,
wherein a pod cavity is defined between the first pod wall and the second pod wall, the pod cavity being at least partially filled with a detergent,
wherein the first pod wall has a wall thickness which varies over the area of the first pod wall, wherein a thickest portion of the first pod wall has a maximum wall thickness (Thₘₐₓ), and wherein a thinnest portion of the first pod wall has a minimum wall thickness of (Thₘᵢₙ) and wherein the minimum wall thickness is at least 14 percent of the maximum wall thickness, in particular at least 18 percent of the maximum wall thickness.

The advantages of the detergent pod are the same as discussed for the female mould. The detergent pod may be manufactured with the female mould according to the invention.

In some embodiments, the first pod wall and a flange plane (P_{f}) defined by the flange enclose a first wall angle (β), wherein said first wall angle is locally smaller than 90 degrees, in particular smaller than 75 degrees. The overhanging wall portion may return in the detergent pod, but less prominent because the detergent pod may deform after ejection from the mould cavity.

In some embodiments, the pod has a pod height (H_{P}), wherein an intermediate plane (Pᵢ) which extends parallel to the flange plane (P_{f}) is situated at an intermediate height (Hᵢ) of 25 percent of the pod height (H_{P}) from the flange plane, and wherein an intermediate cross-sectional area (Aᵢₙₜ) of the pod at the intermediate plane (Pᵢ) is at least 70 percent of a cross-sectional area (Af_{lange}) of the pod at the flange plane (P_{f}). This results in a rather bulbous shape which in turn allows a relatively large internal volume for a relatively small total area of the first and second pod wall.

In some embodiments, the first pod wall forms a dome shape, and wherein the first pod wall has a wall thickness which locally varies, wherein a dome wall thickness (Th_{dome}) of the first pod wall in a central area of the dome shape is greater than 14 percent, in particular greater than 18 percent, of a flange wall thickness (Th_{flange}) of the first pod wall at the flange. Advantageously, the risk of ruptures can be kept relatively low while using a relatively thin first film material.

In some embodiments, a connecting wall thickness (Th_{conn}) is 80-95 µm and wherein the dome wall thickness (Th_{dome}) is at least 22,5 µm.

In some embodiments, when seen in a direction orthogonal to the flange plane (P_{f}), the annular connecting area has a shape comprising one or more corners, wherein the regions of the first pod wall which are situated at the corners are free of any undulating region. An undulating region in the first pod wall may be defined as comprising a concave wall portion situated between a first convex wall portion and a second convex wall portion, the first convex wall portion being located between the corner of the connecting area and the concave wall portion.

In some embodiments of the detergent pod,
- the flange plane (P_{f}) is defined by the flange,
- the flange cross-sectional area (A_{flange}) is the cross-sectional area of the pod at the flange plane (P_{f}),
- Aₘₐₓ is a maximum cross-sectional area of the pod cavity in a maximum area plane (Pₘₐₓ) which extends parallel to the flange plane (P_{f}), and
and the maximum cross-sectional area (Aₘₐₓ) divided by flange cross-sectional area (Aflange) is greater than 1,05.

In some embodiments, the maximum cross-sectional plane (Pmax) which extends parallel to the flange plane (P_{f}) defined by the flange and at which the pod cavity has a maximum cross-sectional area (Amax) is located at a maximum area distance (Diₘₐₓ) which is smaller than 20 percent of a maximum diameter (99) of the pod.

In some embodiments, the first pod wall has a more bulbous shape than the second pod wall. The uneven distribution occurs in particular in the more bulbous pod wall, because this pod wall is deformed more than the less bulbous pod wall.

In some embodiments, at least a portion of the first pod wall and a portion of the second pod wall are curved in two perpendicular planes of curvature.

In some embodiments, a top half of the first pod wall does not have any areas having a radius of curvature (R1) smaller than 20 percent of a maximum diameter of the detergent pod. This results in a more evenly distributed thickness of the first pod wall.

In some embodiments, the top half of the first pod wall is free of corners and sharp transitions. This results in a more evenly distributed thickness of the first pod wall.

In some embodiments, the pod comprises multiple pod compartments, wherein the first film material forms one or more partition pod walls which separate the pod compartments from one another, and wherein the one or more partition pod walls are connected to the second piece at one or more partition connecting areas.

In some embodiments, the pod has an internal volume of between 7 and 40 millilitre, more in particular between 10 and 30 millilitre.

In some embodiments, the first and second film material are made from PVOH.

In some embodiments, the first pod wall and second pod wall are free of any local areas having a wall thickness of less than 22,5 µm.

In some embodiments, when seen in a direction orthogonal to the flange plane (P_{f}), the annular connecting area has a shape comprising one or more corners, wherein at least one region of the first pod wall which is situated at a corner comprises an undulating portion, the undulating portion comprising at least one concave section situated between two convex sections, wherein a length of the concave section of the undulating portion is less than 4 percent of a distance from the corner to the centre of the dome shape, measured along the first pod wall.

The detergent pod in particular has no or less local areas having a wall thickness of less than 22,5 µm.

### SHORT DESCRIPTION OF THE FIGURES

Embodiments of the system and the method will be described by way of example only, with reference to the accompanying schematic drawings in which corresponding reference symbols indicate corresponding parts, and in which:
Figure 1 shows a side view of a mould cavity according to the prior art.
Figure 2 shows an isometric view of a detergent pod according to the prior art.
Figure 3 shows an isometric view of a female mould according to the present invention in exploded view.
Figure 4 shows an isometric view of a female mould according to the present invention.
Figure 5 shows a cross sectional view of a female mould according to the present invention.
Figures 6A - 6D show deformation patterns of film material.
Figures 7A - 7D show mould cavities corresponding with figures 6A-6D.
Figures 8A - 8F show side views of embodiments of mould cavities according to the present invention.
Figures 9A - 9C show different embodiments of mould openings of a female mould according to the present invention in top view.
Figure 10 shows an isometric view of an embodiment of a detergent pod according to the present invention.
Figures 11A, 11B shows cross-sectional side views of embodiments of the detergent pod according to the present invention.
Figures 12A, 12B show side views of mould cavities of respectively the prior art and the present invention.
Figures 13A, 13B show detergent pods of respectively the prior art and the present invention.
Figure 14 shows detergent pods of the prior art and the present invention.
Figures 15A-15E show possible shapes of detergent pods according to the invention.
Figures 16a, 16B, 16C shows another embodiment of a female mould according to the present invention.
Fig. 17A shows a device for manufacturing detergent pods according to the present invention.
Fig. 17B shows another device for manufacturing detergent pods according to the present invention.
Fig. 17C shows a detail of a variant of the embodiment of fig. 17B.
Fig. 18 shows another embodiment of a female mould according to the present invention.
Figures 19A - 19B show further embodiments of a female mould according to the present invention.

### DETAILED DESCRIPTION OF THE FIGURES

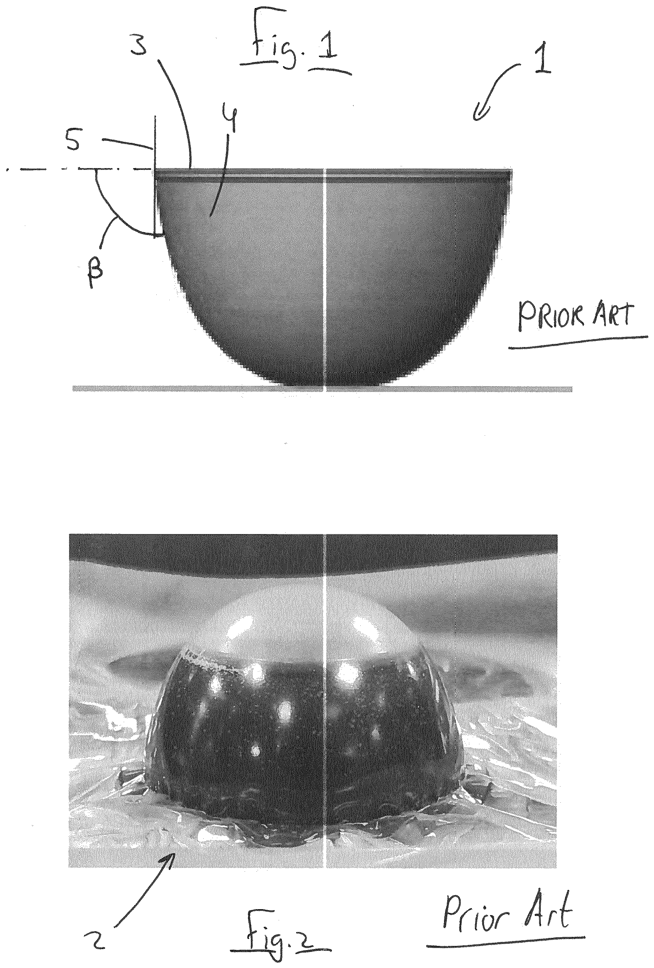

Turning to figure 1, in side view, a shape of a typical female mould 1 for making detergent pods of the prior art is shown. The detergent pod 2 of the prior art associated with this female mould is shown in fig. 2. In use, a first film material is drawn into the female mould by underpressure. It was found that the first film material tends to stretch relatively unevenly when it is drawn into this female mould. In the present invention it was recognized that this problem is related to the first wall angle β enclosed between the pod wall 4 and a plane defined by the top surface 3 of the prior art mould. In fig. 1 the first wall angle β is about 100 degrees.

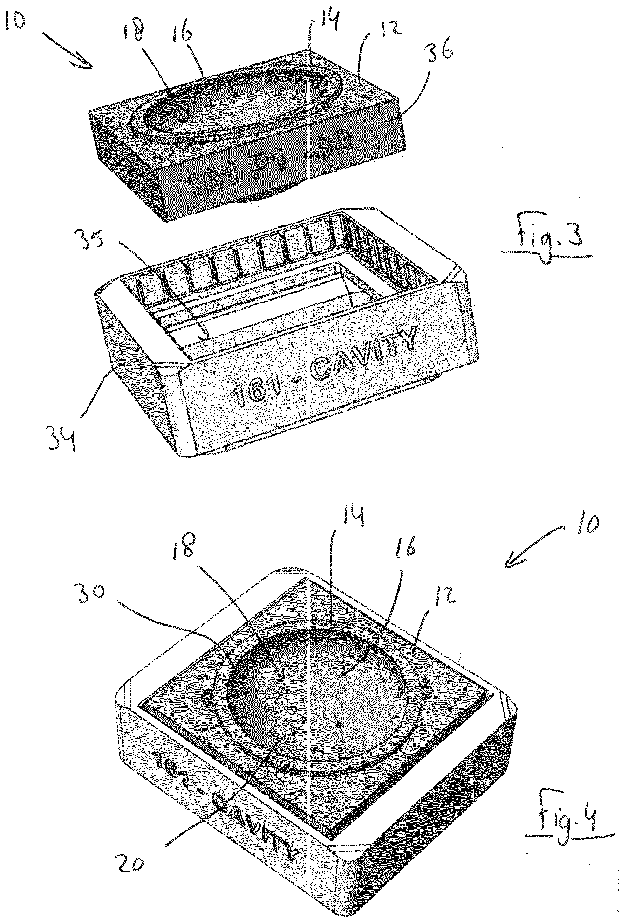

Turning to figures 3, 4 and 5, a female mould 10 for manufacturing detergent pods according to the present invention is shown. The female mould comprises a top surface 12 intended to face upward. The top surface 12 may comprise a raised portion 14, but this is optional. The female mould has a mould opening 25 defined by an edge 30 of the top surface 12. The female mould further comprises a mould wall 16 which defines a mould cavity 18. The mould cavity has a single mould compartment. The mould wall 16 comprises a number of pressure openings 20 which are configured to be in fluid communication with a pressure device (not shown) configured for alternately providing underpressure and overpressure at the pressure openings.

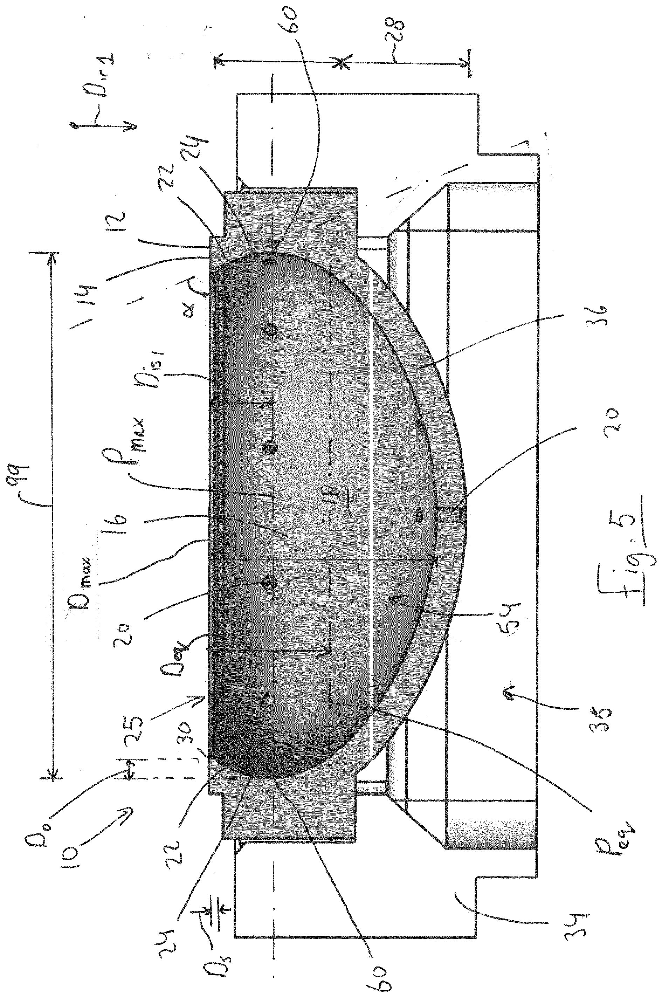

Turning in particular to figure 5, the mould wall 16 comprises an overhanging wall part 22. The mould cavity 18 comprises an undercut volume 24 situated under the overhanging wall part.

The undercut volume 24 is at least 5 percent, in particular at least 10 percent, more in particular at least 20 percent, and even more in particular at least 30 percent, of a total volume (Vₜₒₜ) of the mould cavity.

A maximum cross-sectional plane Pₘₐₓ is a plane which is parallel to the top surface 12 and in which plane the mould cavity has a maximum cross-sectional area Aₘₐₓ. The mould opening 25 has an opening cross-sectional area Aₒₚ. The maximum cross-sectional area divided by the opening cross-sectional area Aₒₚ is greater than 1,05, in particular greater than 1,1, more in particular greater than 1,2, and most in particular greater than 1,4.

The maximum cross-sectional plane is located at a first distance Dis₁ from the top surface 12. , wherein said first distance Dis₁ is smaller than 20 percent of a maximum depth Dₘₐₓ of the mould cavity.

The maximum cross-sectional plane Pₘₐₓ is located at the first distance Dis₁ from the top surface. Said first distance Dis1 is smaller than 20 percent of a maximum diameter 99 of the mould cavity. The diameter 99 of the mould cavity is measured in a plane parallel to the top surface.

When viewed in a downward direction Dir₁ a cross-sectional area of the mould cavity starts to widen at a start depth Dₛ from the mould opening, wherein the start depth is smaller than 20 percent, in particular smaller than 10 percent, of a maximum diameter 99 of the mould cavity. In the embodiment of fig. 5 the start depth is relatively small because the undercut starts almost at the top surface 12.

The start depth is smaller than 10 percent of the maximum depth Dₘₐₓ of the mould.

An equal plane P_{eq} is defined as a plane which is parallel to the top surface 12 and in which the cross-sectional surface area A_{eq} of the mould cavity is the same as the surface area Aₒₚ of the opening 25. The equal plane P_{eq} is located at a depth D_{eq} below the top surface 12. D_{eq} is greater than 30 percent of the maximum depth Dₘₐₓ., more in particular greater than 50 percent. Below the equal plane the surface area A of the mould cavity is smaller than the surface area of the opening.

In the embodiment of figs. 3-5 the mould cavity and the overhanging wall portion 22 is rotationally symmetric about a central axis which extend orthogonal to the top surface. In this embodiment the cross-section of the mould cavity 18 at the equal plane has a same, circular shape as the opening 25. However, detergent pods need not be rotationally symmetric and also may have a shape which varies over the depth. The mould cavity may have an irregular shape. In such embodiments, the shape of the cross-section of the mould cavity at the equal plane may be different from the shape of the opening 25.

At least a portion of the overhanging wall part 22 is oriented at an undercut angle α relative to the top surface of less than 80 degrees, in particular less than 75 degrees. This advantageously improves the evenness of the wall thickness when the first film material is drawn into the mould cavity 18. In addition, this facilitates to obtain a stretch ratio of the first average thickness / second average thickness is smaller than or equal to 2,3.

An overhang distance Dₒ is defined as the maximum horizontal distance between the edge 30 of the top surface and the outermost part 60 of the mould wall 16. The overhang distance Dₒ is indicated in fig. 5. The overhang distance may be at least 3 percent of the maximum diameter of the mould cavity. The overhang distance Dₒ may be at least 3,5 percent of a maximum diameter of the mould opening.

At least a portion of the overhanging wall part 22 is curved in two perpendicular planes of curvature. The embodiment of figs. 3-5 is round when seen in top view and the overhanging wall part extends over its entire circumference.

A lower half 28 of the mould wall does not have any areas having a radius of curvature (R1) smaller than 20 percent of the maximum diameter Dₘₐₓ of the mould cavity. The lower half 28 and the upper half 29 are indicated in fig. 5. The lower half of the cavity wall may define an inverted dome shape 54. The lower half of the mould wall is smooth and free of corners and sharp transitions in orientation.

The overhanging wall part 22 extends around at least 70 percent of a circumference of the mould cavity, more in particular around at least 90 percent of the circumference of the mould cavity. In the embodiment of figs. 3-5, the overhanging wall part extends over the full circumference of the mould cavity, but in other embodiments the overhanging wall portion may not extend over the full circumference.

The female mould comprises a base part 34 which defines a pressure/underpressure chamber 35 and a cavity part 36 which define the mould cavity. The cavity part 36 is placed in a recess 37 in an upper side of the base part 34 and connected to the base part. The cavity part 36 may be replaceable.

Each pod compartment 118 has a volume of between 7 and 40 millilitre, more in particular between 10 and 30 millilitre.

The female mould 10 is not configured to be opened in use and in particular not configured as a split mould. The discharge of the pod is carried out with overpressure only.

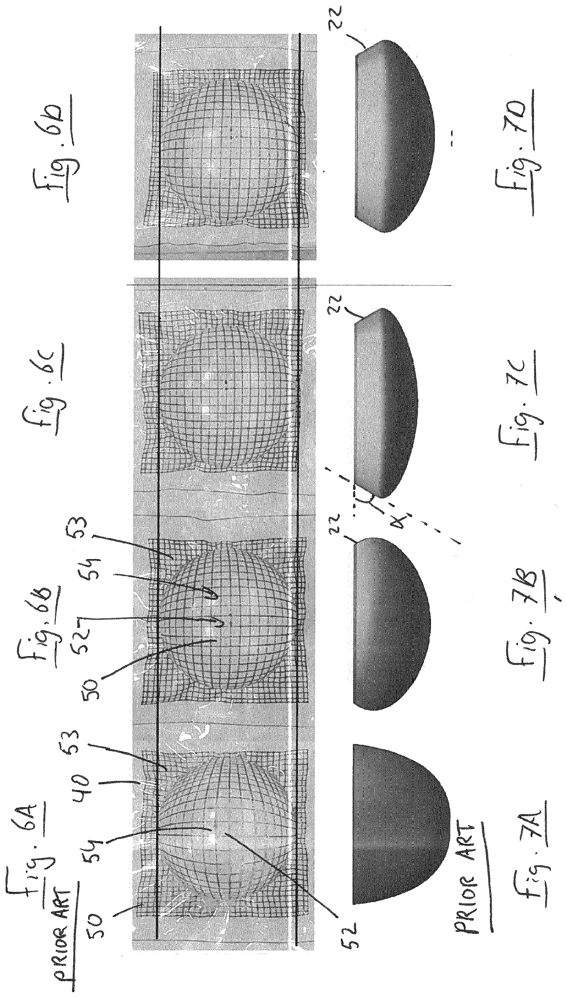

Turning to figures 6A-6D and 7A-7D, the effect of the undercut volume and the overhanging wall part is shown in an example. Figs 6A shows the strain in the first film material for a detergent pod of the prior art according to fig. 7A. The first film material 40 has been provided with grid lines which form squares 50. At a center 52 of the dome shape 54, the squares are enlarged, which indicates the level of the strain. The length and the width of the squares at the center 52 have been enlarged by a factor of roughly 3 relative to the length and width of the squares in the non deformed area 53. Consequently, the surface area of the squares has been enlarged by a factor of about 9. This means that the thickness of the film material is reduced by a factor 9 at the center 52 of the dome shape, i.e. reduced to about 11 percent of the original thickness. Obviously, the numerical values depend on the specific size and shape of the female mould and may vary for other female moulds

It can also be seen that the size of the squares varies considerably over the dome shape 54. The squares are largest at the center 52.

In figure 6B the deformation is shown for a female mould according to the present invention. The squares 50 in the center 52 of the dome shape 54 are considerably smaller. Both the length and the width of the squares are about 25 percent smaller than in fig. 6A. Consequently, the surface area of the squares 50 at the center 52 in fig. 6B is almost a factor 2 smaller than in fig. 6A. As a result, the thickness of the first film material 40 in fig. 6B will almost be twice as high as in fig. 6A and will be about 20 percent of the original thickness. This results in a lower risk of ruptures. Again, the exact values may differ depending on the specific embodiment.

Also, the sizes of the squares in fig. 6B varies less than in Fig. 6A. This means that the thickness of the first film material over the dome also varies less in fig. 6B than in Fig. 6A. In fig. 6A the required strain of the first film material is provided by a relatively small portion of the film material. Conversely, in fig. 6B a greater portion of the film material has a considerable strain, but the maximum strain in Fig. 6B is considerably less than in fig. 6A.

Figure 6C shows the deformation for the female mould of fig. 7C. The female mould has an overhanging wall part 22 which is partially conical. The undercut angle α is about 60 degrees.

The deformation at the center of the dome shape is smaller than in figs 6B and 6A. Figure 6D shows the deformation for the female mould of fig. 7D. The deformation at the center of the dome shape is smaller than in figs 6B and 6A.

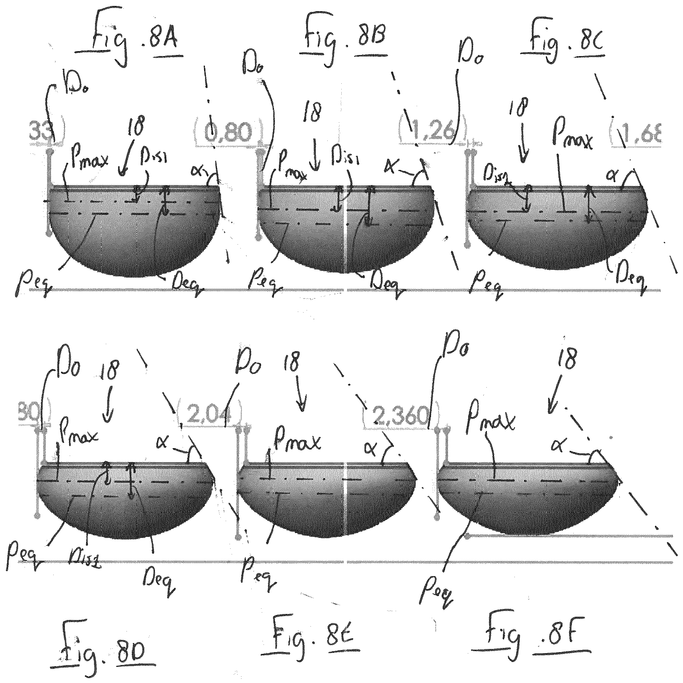

Figures 8A-8F show various possible shapes of the mould cavity 18 with the various parameters Dis₁, D_{eq} and Dₒ., and undercut angle α.

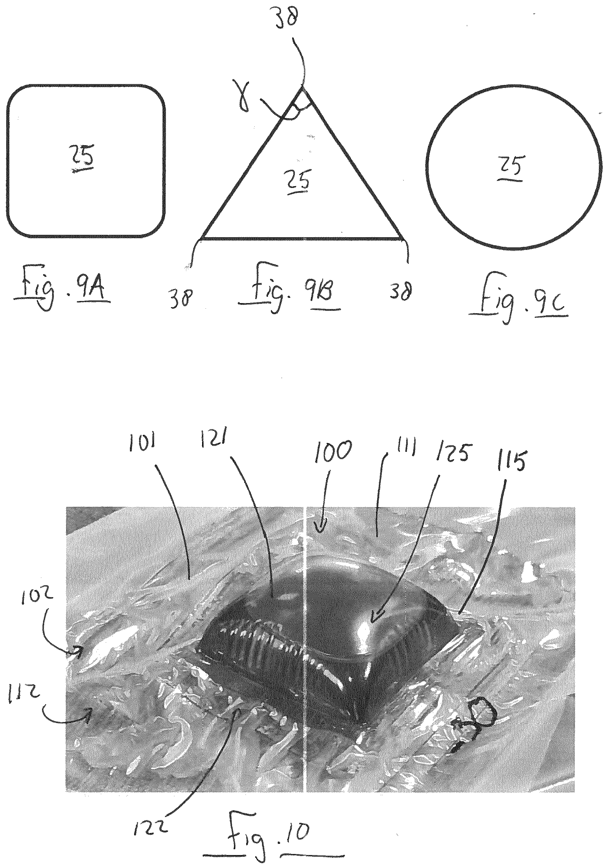

Figures 9A, 9B and 9C show various shapes of the opening 25 of the mould cavity 18 when seen in top view, in a direction orthogonal to the top surface. The opening 25 may be square with rounded corners 38, triangular with sharp corners 38, or circular. In fig. 9B the corner angle γ of the corner is 60 degrees but obviously other shapes will have other angles. Other shapes are also possible as will be discussed below.

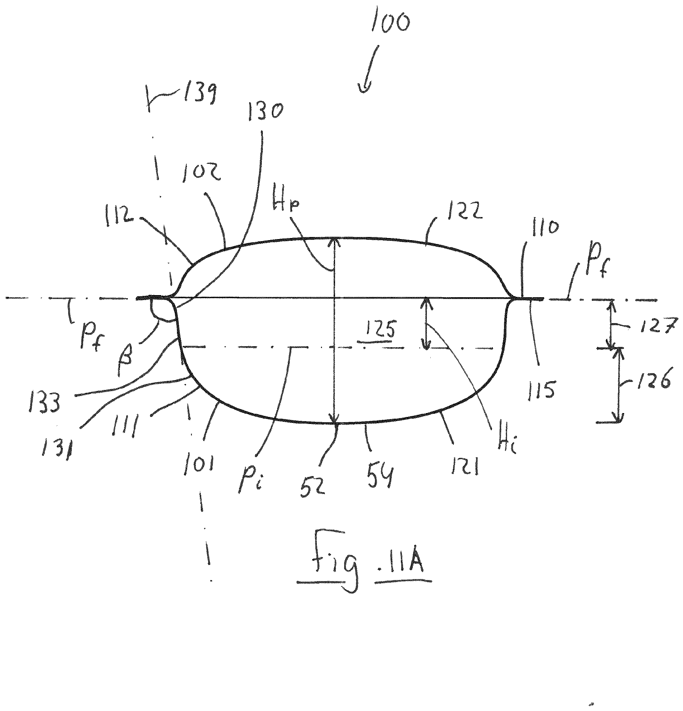

Figures 10 and 11A show a detergent pod 100 according to the present invention obtained with an opening as shown in fig. 9A. It is noted that in fig. 10, the pod is inverted relative to the moulds shown in the previous figures. In fig. 10, the first, bottom film is at the top. The detergent pod comprises a first piece 101 of a first film material 111 forming a first pod wall 121. A second piece 102 of a second film material 112 forming a second pod wall 122 is located underneath the first piece 101.

The first pod wall 121 has a more bulbous shape than the second pod wall 122. At least a portion of the first pod wall 121 and a portion of the second pod wall 122 are curved in two perpendicular planes of curvature. A top half 126 of the first pod wall does not have any areas having a radius of curvature (R1) smaller than 20 percent of a maximum diameter (99) of the dome shape of the detergent pod. The top half 126 of the first pod wall 121 is free of corners and sharp transitions. In fig. 11A, the lower half 127 of the first pod wall is also indicated.

The first pod wall 121 and the second pod wall 122 are free of any local areas having a wall thickness of less than 22,5 µm.

The first and second piece are connected to one another at least along an annular connecting area 110, the annular connecting area forming a flange 115. In fig. 10, the flange has not been cut to size yet. The skilled person will understand that in a finished detergent pod, the flange will be smaller. A pod cavity 125 is defined between the first pod wall 121 and the second pod wall 122. The pod cavity is at least partially filled with a detergent and also comprises a volume of air. The pod cavity has a single pod compartment.

It can be seen in figs. 10 and 11A that even if the mould cavity has an undercut volume, this does not automatically mean that the detergent pod itself will have a same shape as the mould cavity. The resilience of the detergent pod is substantial, and after ejection from the mould cavity, the detergent pod will deform into a shape which in which the detergent pod has a minimum energy. During this deformation, the walls of the pod may adopt a shape without an undercut, wherein the first wall angle β enclosed between a tangent 139 to the first pod wall 101 and the flange 110 becomes greater than 90 degrees.

Because the first pod wall 101 is curved, the first wall angle β will vary along the first pod wall. A the flange 115, the first wall angle β will be 180 degrees. Travelling along the first po wall 101 the first wall angle β will decrease along a concave wall portion 130 of the first pod wall, reach a minimum at a transition point 133 where the concave wall portion 130 goes over in a convex part 131 and then increase again to a canter of the inverted dome shape 54 where the first wall angle β reaches 180 degrees again. The tangent 139 is taken where the concave part of the first pod wall goes over in a convex part, i.e., at the transition point 133 where the first wall angle β reaches a minimum value.

In fig. 11A the first wall angle β is about 95 degrees. In some embodiments, the first wall angle β may stay smaller than 90 degrees because the deformation of the pouch may be small.

The detergent pod 100 has a pod height Hp and an intermediate plane Pi which extends parallel to the flange plane Pf. The intermediate plane Pi is situated at an intermediate height Hi of 25 percent of the pod height Hp from the flange plane. An intermediate cross-sectional area Aint of the pod at the intermediate plane Pi is at least 70 percent of a cross-sectional area Aflange of the pod at the flange plane (Pf).

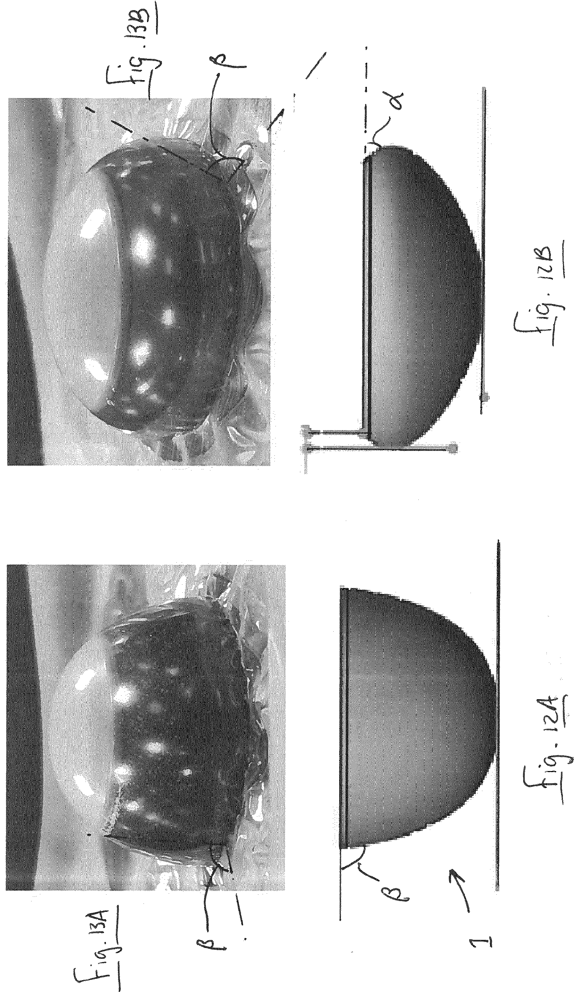

This is also visible in figures 12A, 12B, 13A and 13B. Figures 12A and 13A show a prior art mould respectively a prior art detergent pod. The undercut angle of the prior art female mould is about 97 degrees. The resulting prior art pod 2 has a first wall angle of more than 90 degrees. The mould cavity of the invention as shown in fig. 12B has an undercut angle α of about 45 degrees. The resulting pouch has a first wall angle of about. 80 degrees.

Hence, the mould shape with an 'undercut volume', wherein the mould wall and the flange enclose an undercut angle α of less than 90 degrees, may not be present in the detergent pod itself.

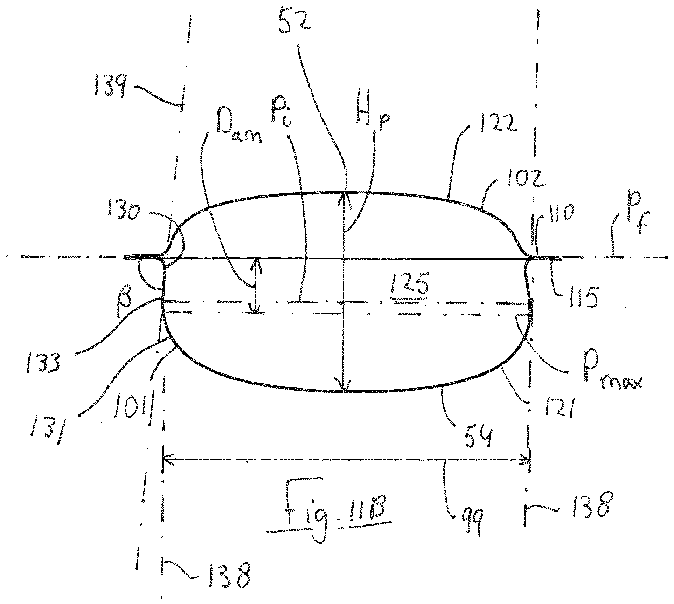

Turning to figure 11B, if the undercut angle α in the female mould is small, for instance 45 degrees, then the first wall angle β taken at the tangent 139 to the first pod wall 101 at a transition point 133 where a concave wall portion 130 goes over in a convex wall portion 131, may be smaller than 90 degrees, for instance 80 degrees.

In fig. 11B, the flange cross-sectional area A_{flange} is the cross-sectional area of the pod at the flange plane Pf. Aₘₐₓ a maximum cross-sectional area of the pod cavity in a maximum area plane Pₘₐₓ which extends parallel to the flange plane Pf. The maximum area plane Pₘₐₓ is taken where the left and right tangents 138 to the first pod wall extend at right angles to the flange plane Pf. The maximum cross-sectional area Aₘₐₓ divided by the flange cross-sectional area A_{flange} is greater than 1,05.

The maximum cross-sectional plane Pₘₐₓ is located at a maximum area distance Dₐₘ which is smaller than 20 percent of a maximum diameter 99 of the dome shape 54 of the detergent pod.

Generally, the first pod wall 121 and the flange plane Pf defined by the flange enclose a first wall angle β, wherein said first wall angle is locally smaller than 75 degrees, in particular smaller than 90 degrees.

The first pod wall 121 forms a dome shape 54. The first pod wall 121 has a wall thickness which locally varies over the area of the first pod wall. A thickest portion of the first pod wall has a maximum wall thickness Thmax. A thinnest portion of the first pod wall has a minimum wall thickness of Thmin. The minimum wall thickness Thmin is greater than 14 percent, in particular greater than 18 percent, of the maximum wall thickness Thmax.

Assuming that the first film material does not stretch significantly at the flange and assuming that the wall thickness is lowest at a central area 52 of the dome, it can be derived that a dome wall thickness Thdome in the central area 52 of the dome shape is greater than 14 percent, in particular greater than 18 percent, of a flange wall thickness Thflange of the first pod wall at the flange. This is a significant improvement over the prior art.

The connecting wall thickness Thconn of the first pod wall 121 may be 80-95 µm. The dome wall thickness Thdome may be at least 22,5 µm.

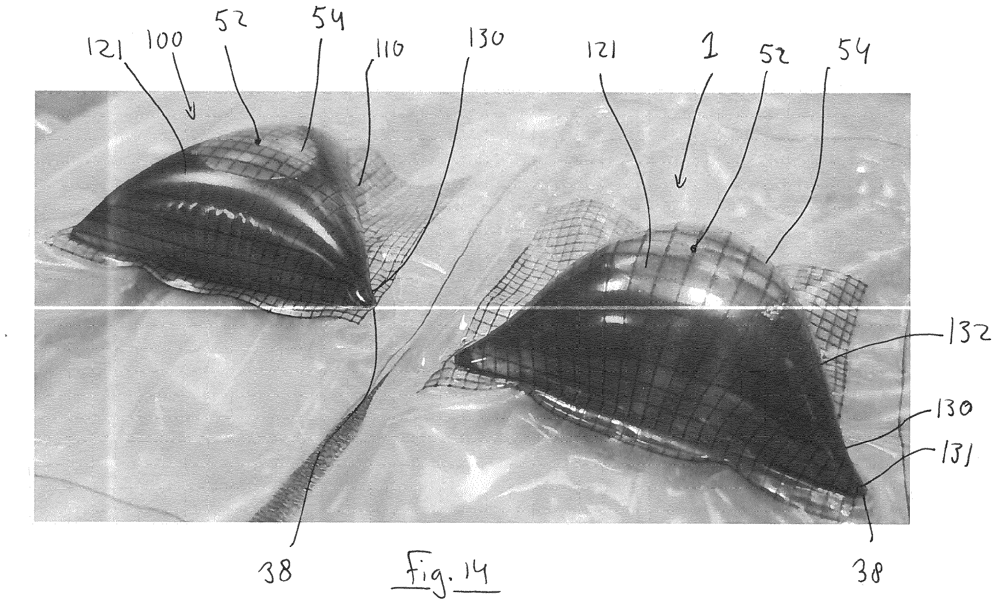

Turning to figure 14, the phenomenon of the dolphin nose is explained. The detergent pod 1 on the right is a prior art detergent pod and the detergent pod 100 on the left is a detergent pod according to the invention. Both detergent pods have a triangular shape of the connecting area 110. Although the flange has not been trimmed to size yet the triangular shape is visible. The detergent pod on the right has a relatively large undulating region ('dolphin nose') in the first pod wall 121 at the corner 38. An undulating region is defined as a concave wall portion 130 situated between a first convex wall portion 131 and a second convex wall portion 132, the first convex wall portion being located between the corner 38 of the connecting area and the concave wall portion 130. In particular, the concave wall portion 130 is quite large in comparison with the concave wall portion 130 on the left detergent pod 100. It was found in the present invention that providing an undercut volume therefore reduces the size of the dolphin nose or eliminates the dolphin nose altogether.

In the prior art detergent pod 1 the concave section 130 of the dolphin nose has a length which is more than 7 percent of a total distance from the corner 38 to the center 52 of the dome shape 54 when measured along the first pod wall 121. This depends on the corner angle γ of the corner. In the detergent pod 100 of the present invention the length of the concave section 130 at the corner is limited to 2-3 percent the total distance from the corner 38 to the center 52 of the dome shape 54 when measured along the first pod wall 121 and is in particular less than 4 percent.

The detergent pod 100 typically has an internal volume of between 7 and 40 millilitre, more in particular between 10 and 30 millilitre. Other volumes are also possible.

The first and second film material are generally made from PVOH.

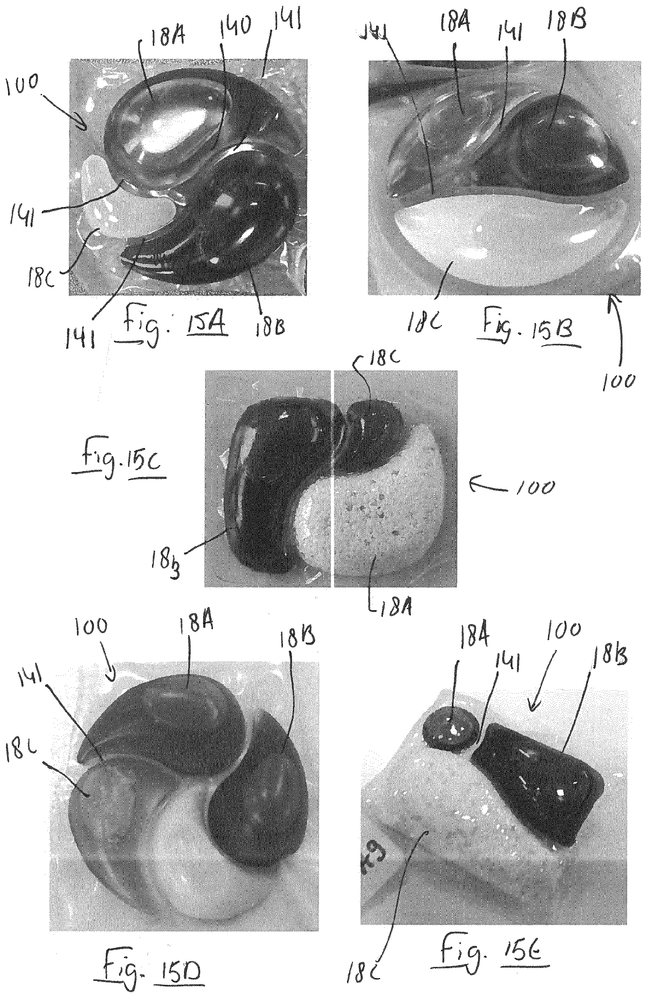

Turning to figures 15A-15E, the detergent pod 100 may comprise multiple pod compartments 118A, 118B, 118C, etc.. The first film material 111 forms one or more partition pod walls 140 which separate the pod compartments from one another, and wherein the one or more partition pod walls 140 are connected to the second piece 102 at one or more partition connecting areas 141. The female mould for manufacturing such detergent pods may have an overhanging wall part and an undercut volume.

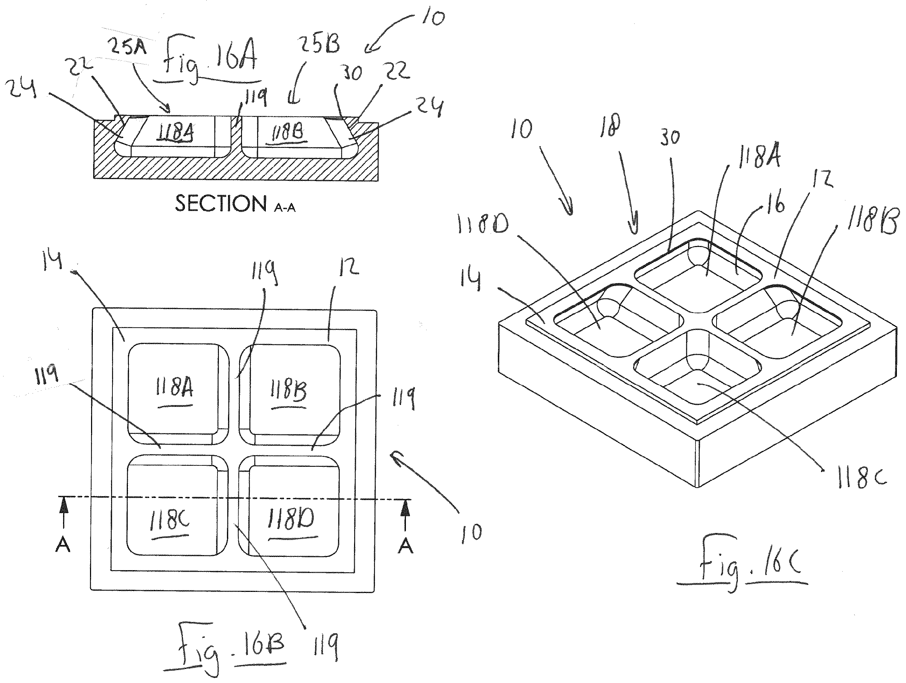

Turning to figs. 16A, 16b, 16C, a female mould 10 comprising a mould cavity 18 having four mould compartments 118A, 118B, 118C, 118D separated by partition walls 119 is shown. The four compartments - when seen in top view - each have a square shape with rounded corners. The four compartments also form a combined square. The mould cavity may comprise two, three, four, five, six, seven or eight mould compartments 118. The mould wall comprises an outer mould wall and one or more partition walls 119 which separate the mould compartments from one another.

The partition walls 119 in this example are straight, but may also be curved. The undercut volume 24 is provided in the outer wall, not in the partition wall.

An individual mould compartment may have a volume in a range of 0,2 ml - 30 ml.

A bottom wall of each mould compartment is flat. It is noted that detergent pod formed with this female mould may still have non-flat first pod wall 121. This is merely one example. An endless variety of female moulds with multiple compartments can be designed.

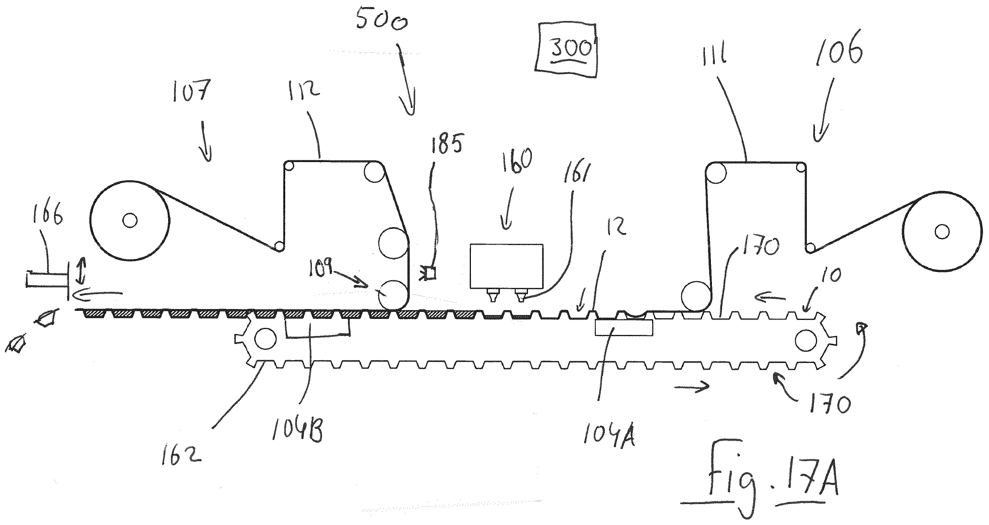

Turning to fig. 17A, the detergent pods 100 can be made in a device 200 for manufacturing detergent pods 100.

The device comprises:
- an endless belt 162.
- a plurality of female moulds 10 according to the invention arranged in the endless belt 102 or rotary drum.
- one or more pressure devices 104, 104A;104B configured for first providing underpressure and subsequently providing overpressure at the pressure openings of each female mould. In this embodiment there are two pressure devices. A first pressure device 104A provides underpressure and a second pressure device 104B which is positioned further downstream provides overpressure.
- a first film supply device 106 configured for supplying a first film material 111 on the top surface 12 of each female mould, the first film material intended to be drawn into the female moulds by the underpressure, thereby forming at least one pod cavity 125.
- a detergent supply device 160 configured for at least partially filling each pod cavity with a detergent.
- a second film supply device 107 configured for placing a second film material 112 onto the first film material.
- a connecting device 109 configured for connecting the second film material to the first film material in each connecting area which extends around the mould opening of each female mould. The connecting device may comprise a wetting device for wetting the first and or second film material and a roller for pressing the first film material against the second film material.
- a separating device 166 configured for separating the formed detergent pods from one another.

In fig. 17A the endless belt 162 shows a single row 171 of female moulds, but the skilled person will understand that the endless belt 162 may have a considerable width and several adjacent rows 170A, 170b, etc.. of female moulds 10 may be formed in the endless belt.

When the device is in use, the method of manufacturing the detergent pods comprises:
- positioning the first film material 111 on the top surface of a female mould according to the invention,
- providing underpressure at the pressure openings 20 of each female mould, thereby drawing the first film material 111 into the mould cavity until the first film material contacts at least a portion of the mould wall 16 of the female mould, thereby forming a pod cavity 125, and
- at least partially filling the pod cavity with a first detergent with the detergent supply device,
- positioning the second film material 112 onto the first film material 111,
- connecting the second film material to the first film material in a connecting area 110 around the mould opening 25 with the connecting device,
- providing overpressure at the pressure openings with the pressure device 104B and discharging the formed detergent pod from the female mould.

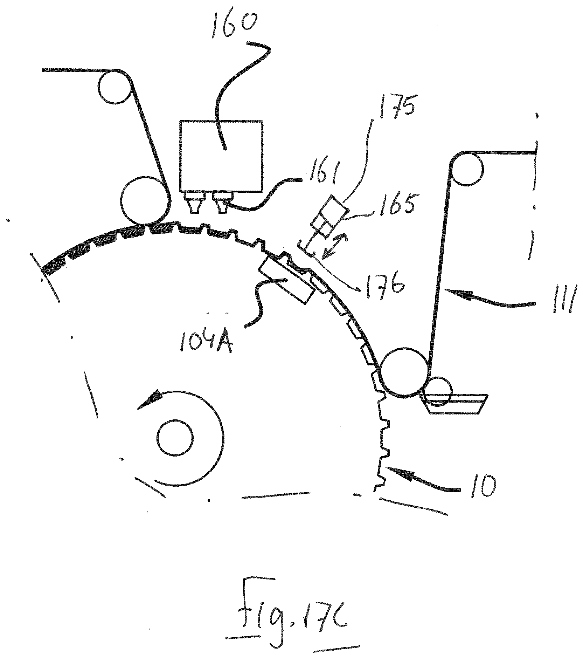

The provision of underpressure may be accompanied or preceded by a pusher member (see fig. 17C) which pushes the first film material into the female moulds.

Because of the overhanging wall part 22, the first film material 111 does not contact the entire mould wall 16 prior to filling the pod cavity with detergent and in particular does not contact the entire overhanging wall part 22.

The pressure devices 104A, 104B are stationary.

The first film material 111 first contacts a bottom 170 of the mould cavity and subsequently contacts at least a portion of the overhanging wall part 22. The bottom coincides with the dome shape 54 and in particular with a central area of the dome shape 54.

The first film material forms a first pod wall 121 which forms a dome shape 54. The first pod wall 121 has a wall thickness which locally varies over the area of the first pod wall. A thickest portion of the first pod wall has a maximum wall thickness Thmax. A thinnest portion of the first pod wall 121 has a minimum wall thickness of Thmin. The minimum wall thickness is greater than 14 percent, in particular greater than 18 percent, of the maximum wall thickness.

The first pod wall 121 forms a dome shape 54. As a result of the deformation during the forming of the dome 54, the first piece 101 of first film material 111 has a wall thickness which locally varies. A dome wall thickness (Thdome) in a central area 52 of the dome shape 54 is greater than 14 percent, in particular greater than 18 percent, of a flange wall thickness (Thflange) of the first pod wall 121 at the flange.

The first and second film material 111,112 may be water-soluble and may in particular be made from PVOH. The first film material and/or second film material may be wetted with a liquid supply device prior to connecting the second film material to the first film material.

Prior to forming the pod cavity, the first film material 111 has a thickness of 80-95µm. The second film material 112 is thinner than the first film material.

The pressure device is configured for creating overpressure at the pressure openings in order to eject the formed pods from the mould cavities. The device does not comprise any other means for discharging the formed pods from the moulds than the pressure device.

The device 500 may comprise a control unit 300 configured to control the various parts of the device to carry out the following cycle:
- positioning the first film material 111 on the top surface 12 with the first film supply device 106,
- creating underpressure at the pressure openings with the pressure device 104 and drawing the first film material into the at least one mould cavity 16 until the first film material contacts at least a portion of the mould wall of each female mould, thereby forming at least one pod cavity 125,
- at least partially filling the at least one pod cavity with a first detergent by the detergent supply device 160,
- positioning the second film material 112 on the first film material with the second film supply device,
- connecting the second film material to the first film material with the connecting device 109 in a connecting area which extends at least around the circumference of the mould opening,
- providing overpressure at the pressure openings with the pressure device, and discharging the formed detergent pods from the female moulds,
- cutting the first and second film around the connecting area with the cutting device 166, thereby forming the detergent pods.

The cutting and the discharging of the pods may be carried out in any order, i.e., first cutting and then discharging or first discharging and then cutting.

The detergent supply device 160 comprises one or more nozzles 161.

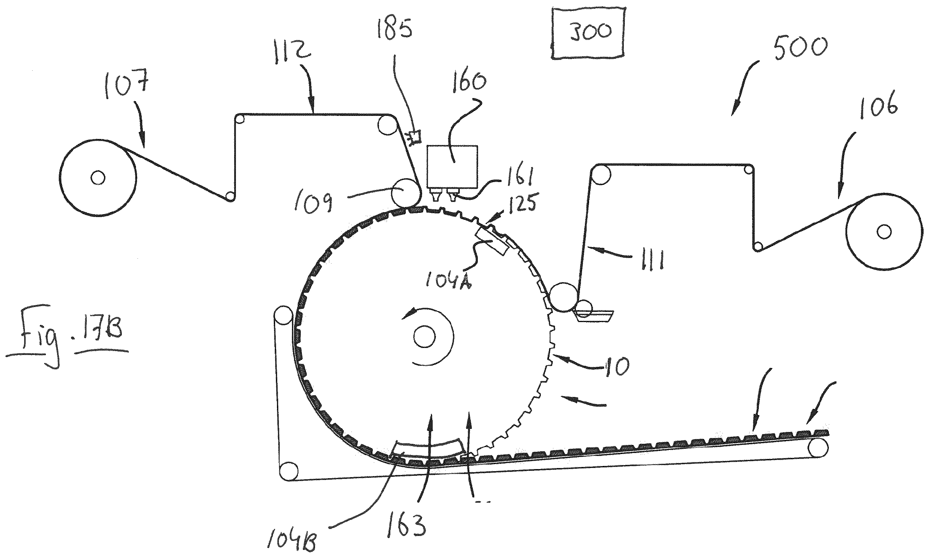

Turning to fig. 17B, another variant is shown wherein a rotary drum 163 is used instead of an endless belt. The drum rotates counterclockwise in fig. 17B. Several adjacent rows of female moulds 10 may be formed in the rotary drum to provide a significant production capacity.

Turning to fig. 17C a variant of the device 500 of fig. 17B is shown in which the first film material 111 is drawn into the female moulds 10 by a pusher device 165 and underpressure. The pusher device 165 may and the pressure device 104A may operate simultaneously or consecutively. When operated consecutively, the pusher device 165 first pushes the first film material into the female mould, followed by applying underpressure with the pressure device 104A. The pusher device 165 comprises a pusher actuator 175 and a pusher member 176 which may have a shape which mates with the shape of the female mould 10.

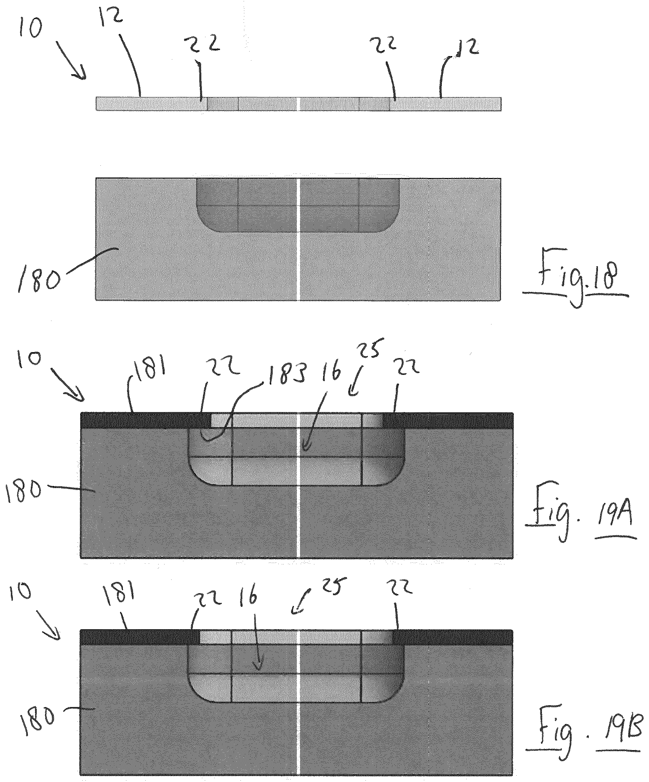

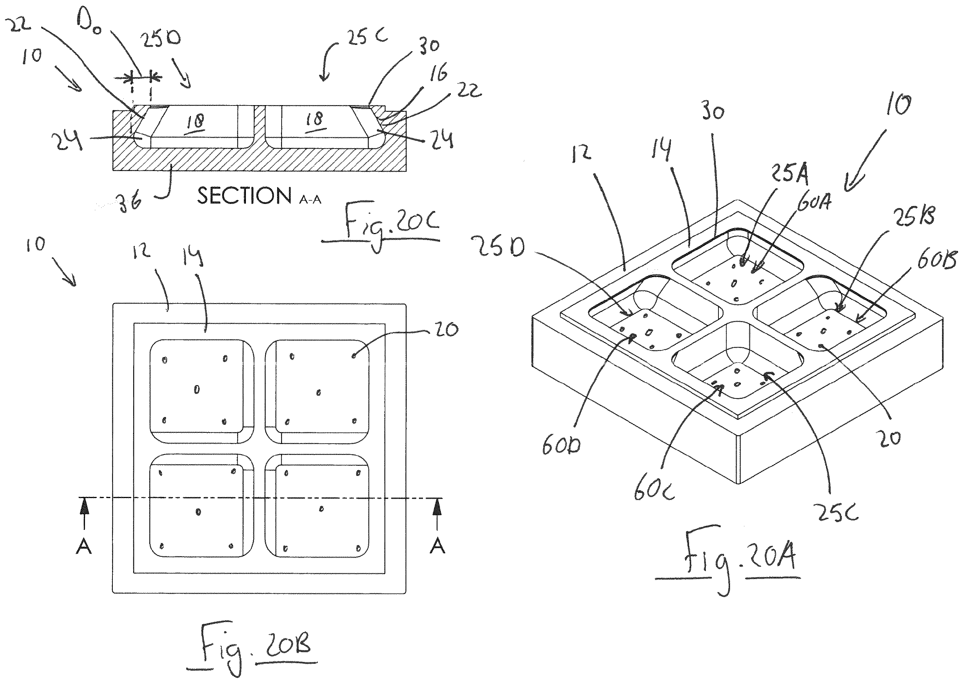

Turning to figure 18, the female mould 10 may comprise a lower mould part 180 and an upper mould part 181 which are not integral but are separate parts which are connected to one another. The upper mould part 181 comprises the overhanging wall part 22. The lower mould part 180 does not comprise an overhanging wall part.

Turning to figs. 19A, 19B, the female mould 10 can have overhanging wall parts 22 of various shapes. An underside 183 of the overhanging wall part 22 is horizontal in these embodiments. When the first film material is drawing into the mould cavity 16, the film material will not contact the underside of the overhanging wall part 183. The bottom of the mould wall 18 is flat and horizontal, but the detergent pods made with these female moulds may still have a slight dome shape 54 because the detergent pods may slightly deform after they are ejected from the mould cavity.

The connecting device may comprise a liquid supply device 185 for wetting the first and/or second film material, in particular with water.

The undercut volume does not necessarily have to be parallel to the flange. The flange itself also does not necessarily have to be entirely flat. In some case, a non-flat flange, i.e., a three-dimensional flange may be applied. In that case the flange plane is considered to form a plane that best fits the three-dimensional flange.

The formed detergent pods are separated from one another with a cutting device, in particular prior to discharging the detergent pods from the female moulds. The method may comprise heating the first and/or second film material. the first film material and/or a second heating device for heating the second film material.

The term detergent pod is intended to be interpreted in a broad manner and the word detergent is intended to cover all agents and compositions which are used in the washing of dishes in a dishwasher and in the washing of clothes in a washing machine. Such agents and compositions can be a in liquid form, in a powder form and in a gel form. Fabric softeners, stain remover, colour protector, pre-treaters and other types of compositions are also covered by the word detergent.

The term undercut region is defined to indicate a portion of the mould cavity which is situated below an overhanging portion of the mould wall.

The term dome shape is intended to have a broad meaning and covers any symmetric, asymmetric, regular or irregular dome type shape which is associated with a connecting area having a circular shape, square shape, triangular shape, drop or kidney shape, yin shape, or other kind of shape suitable for detergent pods.

The term underpressure is used to indicate a pressure lower than atmospheric and the term overpressure is used to indicate a pressure higher than atmospheric.

It is noted that in the industry the word pouch instead of pod is also used when referring to a detergent pod. The words pod and pouch are considered synonyms in this document

The terms "a" or "an", as used herein, are defined as one or more than one. The term plurality, as used herein, is defined as two or more than two. The term another, as used herein, is defined as at least a second or more. The terms including and/or having, as used herein, are defined as comprising (i.e., open language, not excluding other elements or steps). Any reference signs in the claims should not be construed as limiting the scope of the claims or the invention.

## Claims

1. Female mould (10) for manufacturing detergent pods (100), such as for use in a dishwasher or a washing machine, the female mould comprising:
- a top surface (12) intended to face upward,
- a mould opening (25) provided in the top surface,
- a mould wall (16) which defines a mould cavity (18) which is accessible via the mould opening, the mould cavity comprising at least one mould compartment (118), wherein the mould wall comprises a number of pressure openings (20) which allow air or another gas to flow into or out of the mould cavity,
wherein the mould wall comprises an overhanging wall part (22), wherein the mould cavity comprises an undercut volume (24) situated under the overhanging wall part, and
wherein the female mould is not configured to be opened in use and not configured as a split mould.

2. Female mould according to the preceding claim, wherein the undercut volume (24) is at least 5 percent, in particular at least 10 percent, more in particular at least 20 percent, and most in particular at least 30 percent, of a total volume (Vₜₒₜ) of the mould cavity.

3. Female mould according to any of the preceding claims, wherein at least a portion of the overhanging wall part is oriented at an angle (α) relative to the top surface of less than 80 degrees, in particular less than 75 degrees.

4. Female mould according to any of the preceding claims, comprising two, three, four, five, six, seven or eight mould compartments (118A, 118B, 118C, 118D, etc.), wherein the mould wall comprises an outer mould wall and one or more partition walls (119) which separate the mould compartments from one another.

5. Female mould according to any of the preceding claims, comprising a lower mould part (180) and an upper mould part (181) which are not integral but are separate parts which are connected to one another, wherein the upper mould part is connected to the lower mould part, wherein the upper mould part comprises the overhanging wall part, and wherein in particular the lower mould part does not comprise an overhanging wall part.

6. Female mould according to any of the preceding claims, comprising a base part (34) which defines a pressure/underpressure chamber (35) and a cavity part (36) which defines the mould cavity, wherein the cavity part is replaceable.

7. Female mould according to any of the preceding claims, wherein the pressure openings are configured to be in fluid communication with a pressure device configured for alternately providing underpressure and overpressure

8. Device (500) for manufacturing detergent pods (100), the device comprising:
- an endless belt (162) or rotary drum,
- a plurality of female moulds (10) according to any of the preceding claims arranged in the endless belt or rotary drum,
- one or more pressure devices (104, 104A;104B) configured for first providing underpressure and subsequently providing overpressure at the pressure openings of each female mould,
- a first film supply device (106) configured for supplying a first film material (111) on the top surface of each female mould, the first film material being intended to be drawn into the female moulds by the underpressure, thereby forming a pod cavity (125),
- a detergent supply device (160) configured for at least partially filling each pod cavity with a detergent,
- a second film supply device (107) configured for placing a second film material (112) onto the first film material,
- a connecting device (109) configured for connecting the second film material to the first film material in each connecting area (110) which extends around the mould opening (25) of each female mould,
- a separating device (166) configured for separating the formed detergent pods from one another.

9. Device according to preceding claim, wherein the pressure device is configured for creating overpressure at the pressure openings in order to eject the formed pods from the mould cavities.

10. Device according to claim 8 or 9, wherein the device does not comprise any other means for discharging the formed pods from the moulds than the pressure device.

11. Device according to any of claims 8 - 10, comprising a control unit (300) configured to control the various parts of the device to carry out the following cycle:
- positioning the first film material on the top surface with the first film supply device,
- creating underpressure at the pressure openings with the pressure device and drawing the first film material into the at least one mould cavity until the first film material contacts at least a portion of the mould wall of each female mould, thereby forming at least one pod cavity,
- at least partially filling the at least one pod cavity with a first detergent by the detergent supply device,
- positioning the second film material on the first film material with the second film supply device,
- connecting the second film material to the first film material with the connecting device in a connecting area which extends at least around the circumference of the mould opening,
- cutting the first and second film around the connecting area with the cutting device, thereby forming the detergent pods,
- providing overpressure at the pressure openings with the pressure device, and discharging the formed detergent pods from the female moulds.

12. Method of manufacturing a detergent pod (100), the method comprising:
- positioning a first film material (111) on the top surface of a female mould according to any of claims 1-7,
- moving the first film material into the mould cavity by deforming the first film material until the first film material contacts at least a portion of the mould wall of the female mould, thereby forming a pod cavity, and
- at least partially filling the pod cavity with a first detergent,
- positioning the second film material (112) onto the first film material,
- connecting the second film material to the first film material in a connecting area (110) around the mould opening with the connecting device,
- discharging the formed detergent pod from the female mould.

13. Method according to the preceding claim, the method comprising:
- providing a pressure difference over the first film material in order to deform the first film material and move the first film material into the mould, and
- providing an opposite pressure difference over the formed detergent pod to discharge the formed detergent pod from the female mould.

14. Method according to claim 12 or 13, wherein the first and second film material are water-soluble and are in particular made from PVOH, and wherein the first film material and/or second film material is wetted with a liquid supply device prior to connecting the second film material to the first film material.

## Patentansprüche

1. Matrize (10) zur Herstellung von Reinigungsmittelkapseln (100), wie zum Beispiel zur Verwendung in einer Geschirrspülmaschine oder einer Waschmaschine, die Matrize Folgendes umfassend:
- eine obere Fläche (12), die nach oben zeigen soll,
- eine Formöffnung (25), die in der oberen Fläche bereitgestellt ist,
- eine Formwand (16), die einen Formhohlraum (18) definiert, der über die Formöffnung zugänglich ist, wobei der Formhohlraum mindestens einen Formraum (118) umfasst, wobei die Formwand eine Anzahl von Drucköffnungen (20) umfasst, die ermöglichen, dass Luft oder ein anderes Gas in den Formhohlraum hinein oder aus diesem heraus strömt,
wobei die Formwand einen überhängenden Wandteil (22) umfasst, wobei der Formhohlraum ein Unterschnittvolumen (24) umfasst, das unter dem überhängenden Wandteil angeordnet ist, und
wobei die Matrize nicht eingerichtet ist, um bei Verwendung geöffnet zu werden, und nicht als eine geteilte Form eingerichtet ist.

2. Matrize nach dem vorhergehenden Anspruch, wobei das Unterschnittvolumen (24) mindestens 5 Prozent, besonders mindestens 10 Prozent, insbesondere mindestens 20 Prozent und ganz besonders mindestens 30 Prozent eines Gesamtvolumens (Vₜₒₜ) des Formhohlraums ist.

3. Matrize nach einem der vorhergehenden Ansprüche, wobei mindestens ein Abschnitt des überhängenden Wandteils in einem Winkel (α) relativ zu der oberen Oberfläche von weniger als 80 Grad, insbesondere von weniger als 75 Grad, orientiert ist.

4. Matrize nach einem der vorhergehenden Ansprüche, umfassend zwei, drei, vier, fünf, sechs, sieben oder acht Formräume (118A, 118B, 118C, 118D usw.), wobei die Formwand eine äußere Formwand und eine oder mehrere Trennwände (119) umfasst, welche die Formräume voneinander trennen.

5. Matrize nach einem der vorhergehenden Ansprüche, umfassend ein Formunterteil (180) und ein Formoberteil (181), die nicht integral, sondern separate Teile sind, die miteinander verbunden sind, wobei der Formoberteil mit dem Formunterteil verbunden ist, wobei der Formoberteil den überhängenden Wandteil umfasst, und wobei insbesondere der Formunterteil keinen überhängenden Wandteil umfasst.

6. Matrize nach einem der vorhergehenden Ansprüche, umfassend einen Basisteil (34), der eine Druck-/Unterdruckkammer (35) definiert, und einen Hohlraumteil (36), der den Formhohlraum definiert, wobei der Hohlraumteil austauschbar ist.

7. Matrize nach einem der vorhergehenden Ansprüche, wobei die Drucköffnungen eingerichtet sind, um in Fluidverbindung mit einer Druckvorrichtung zu stehen, die eingerichtet ist, um abwechselnd Unterdruck und Überdruck bereitzustellen.

8. Vorrichtung (500) zur Herstellung von Reinigungsmittelkapseln (100), die Vorrichtung Folgendes umfassend:
- ein Endlosband (162) oder eine Drehtrommel,
- mehrere Matrizen (10) nach einem der vorhergehenden Ansprüche, die in dem Endlosband oder der Drehtrommel angeordnet sind,
- eine oder mehrere Druckvorrichtungen (104, 104A; 104B), die eingerichtet sind, um an den Drucköffnungen jeder Matrize zuerst Unterdruck bereitzustellen und anschließend Überdruck bereitzustellen,
- eine erste Folienzufuhrvorrichtung (106), die eingerichtet ist, um ein erstes Folienmaterial (111) auf der oberen Fläche jeder Matrize zuzuführen, wobei das erste Folienmaterial durch den Unterdruck in die Matrizen gezogen werden soll, wodurch ein Kapselhohlraum (125) ausgebildet wird,
- eine Reinigungsmittelzufuhrvorrichtung (160), die eingerichtet ist, um jeden Kapselhohlraum zumindest teilweise mit einem Reinigungsmittel zu füllen,
- eine zweite Folienzufuhrvorrichtung (107), die eingerichtet ist, um ein zweites Folienmaterial (112) auf dem ersten Folienmaterial anzuordnen,
- eine Verbindungsvorrichtung (109), die eingerichtet ist, um das zweite Folienmaterial mit dem ersten Folienmaterial in jedem Verbindungsbereich (110) zu verbinden, der sich um die Formöffnung (25) jeder Matrize erstreckt,
- eine Trennvorrichtung (166), die eingerichtet ist, um die ausgebildeten Reinigungsmittelkapseln voneinander zu trennen.

9. Vorrichtung nach dem vorhergehenden Anspruch, wobei die Druckvorrichtung eingerichtet ist, um an den Drucköffnungen einen Überdruck zu erzeugen, um die ausgebildeten Kapseln aus den Formhohlräumen auszustoßen.

10. Vorrichtung nach Anspruch 8 oder 9, wobei die Vorrichtung keine anderen Mittel zum Ausstoßen der ausgebildeten Kapseln aus den Formen als die Druckvorrichtung umfasst.

11. Vorrichtung nach einem der Ansprüche 8 bis 10, umfassend eine Steuereinheit (300), die eingerichtet ist, um die verschiedenen Teile der Vorrichtung zu steuern, um den folgenden Zyklus auszuführen:
- Positionieren des ersten Folienmaterials auf der oberen Fläche mit der ersten Folienzufuhrvorrichtung,
- Erzeugen eines Unterdrucks an den Drucköffnungen mit der Druckvorrichtung und Ziehen des ersten Folienmaterials in den mindestens einen Formhohlraum, bis das erste Folienmaterial mit zumindest einem Abschnitt der Formwand jeder Matrize in Kontakt kommt, wodurch mindestens ein Kapselhohlraum ausgebildet wird,
- mindestens teilweises Füllen des mindestens einen Kapselhohlraums mit einem ersten Reinigungsmittel durch die Reinigungsmittelzufuhrvorrichtung,
- Positionieren des zweiten Folienmaterials auf dem ersten Folienmaterial mit der zweiten Folienzufuhrvorrichtung,
- Verbinden des zweiten Folienmaterials mit dem ersten Folienmaterial mit der Verbindungsvorrichtung in einem Verbindungsbereich, der sich mindestens um den Umfang der Formöffnung herum erstreckt,
- Schneiden der ersten und der zweiten Folie um den Verbindungsbereich herum mit der Schneidvorrichtung, wodurch die Reinigungsmittelkapseln ausgebildet werden,
- Bereitstellen von Überdruck an den Drucköffnungen mit der Druckvorrichtung, und Ausstoßen der ausgebildeten Reinigungsmittelkapseln aus den Matrizen.

12. Verfahren zur Herstellung einer Reinigungsmittelkapsel (100), das Verfahren Folgendes umfassend:
- Positionieren eines ersten Folienmaterials (111) auf der oberen Fläche einer Matrize nach einem der Ansprüche 1 bis 7,
- Bewegen des ersten Folienmaterials in den Formhohlraum durch Verformen des ersten Folienmaterials, bis das erste Folienmaterial mit mindestens einem Abschnitt der Formwand der Matrize in Kontakt kommt, wodurch ein Kapselhohlraum ausgebildet wird, und
- mindestens teilweises Füllen des Kapselhohlraums mit einem ersten Reinigungsmittel,
- Positionieren des zweiten Folienmaterials (112) auf dem ersten Folienmaterial,
- Verbinden des zweiten Folienmaterials mit dem ersten Folienmaterial in einem Verbindungsbereich (110) um die Formöffnung herum mit der Verbindungsvorrichtung,
- Ausstoßen der ausgebildeten Reinigungsmittelkapsel aus der Matrize.

13. Verfahren nach dem vorhergehenden Anspruch, das Verfahren Folgendes umfassend:
- Bereitstellen einer Druckdifferenz über dem ersten Folienmaterial, um das erste Folienmaterial zu verformen und das erste Folienmaterial in die Form zu bewegen, und
- Bereitstellen einer entgegengesetzten Druckdifferenz über der ausgebildeten Reinigungsmittelkapsel, um die ausgebildete Reinigungsmittelkapsel aus der Matrize auszustoßen.

14. Verfahren nach Anspruch 12 oder 13, wobei das erste und das zweite Folienmaterial wasserlöslich und insbesondere aus PVOH hergestellt sind, und wobei das erste Folienmaterial und/oder das zweite Folienmaterial vor dem Verbinden des zweiten Folienmaterials mit dem ersten Folienmaterial mit einer Flüssigkeitszufuhrvorrichtung benetzt wird.

## Revendications

1. Moule femelle (10) destinée à la fabrication de capsules de détergent (100), par exemple pour une utilisation dans un lave-vaisselle ou une machine à laver, le moule femelle comprenant :
- une surface supérieure (12) destinée à être tournée vers le haut,
- une ouverture de moule (25) ménagée dans la surface supérieure,
- une paroi de moule (16) qui définit une cavité de moule (18) qui est accessible par l'ouverture de moule, la cavité de moule comprenant au moins un compartiment de moule (118), la paroi de moule comprenant un nombre d'ouvertures à pression (20) qui permettent à l'air ou à un autre gaz de pénétrer dans la cavité de moule ou d'en sortir,
la paroi de moule comprenant une partie de paroi en surplomb (22), la cavité de moule comprenant un volume de contre-dépouille (24) situé sous la partie de paroi en surplomb, et
le moule femelle n'étant pas conçu pour être ouvert en cours d'utilisation et n'étant pas conçu comme un moule fendu.

2. Moule femelle selon la revendication précédente, dans lequel le volume de contre-dépouille (24) représente au moins 5 pour cent, en particulier au moins 10 pour cent, plus particulièrement au moins 20 pour cent, et idéalement au moins 30 pour cent, d'un volume total (Vₜₒₜ) de la cavité de moule.

3. Moule femelle selon l'une quelconque des revendications précédentes, dans lequel au moins une portion de la partie de paroi en surplomb est orientée selon un angle (α) par rapport à la surface supérieure de moins de 80 degrés, en particulier moins de 75 degrés.

4. Moule femelle selon l'une quelconque des revendications précédentes, comprenant deux, trois, quatre, cinq, six, sept ou huit compartiments de moule (118A, 118B, 118C, 118D, etc.), la paroi de moule comprenant une paroi externe de moule et une ou plusieurs cloisons (119) qui séparent les compartiments de moule les uns des autres.

5. Moule femelle selon l'une quelconque des revendications précédentes, comprenant une partie inférieure de moule (180) et une partie supérieure de moule (181) qui ne forment pas une seule pièce, mais constituent des parties distinctes qui sont reliées l'une à l'autre, la partie supérieure de moule étant reliée à la partie inférieure de moule, la partie supérieure de moule comprenant la partie de paroi en surplomb, et en particulier la partie inférieure de moule ne comprenant pas de partie de paroi en surplomb.

6. Moule femelle selon l'une quelconque des revendications précédentes, comprenant une partie de base (34) qui définit une chambre de pression/dépression (35) et une partie de cavité (36) qui définit la cavité de moule, la partie de cavité étant remplaçable.

7. Moule femelle selon l'une quelconque des revendications précédentes, dans lequel les ouvertures à pression sont conçues pour être en communication fluidique avec un dispositif à pression conçu pour appliquer de façon alternée une dépression et une surpression.

8. Dispositif (500) destiné à la fabrication de capsules de détergent (100), le dispositif comprenant :
- une courroie sans fin (162) ou un tambour rotatif,
- une pluralité de moules femelles (10), selon l'une quelconque des revendications précédentes, disposés dans la courroie sans fin ou le tambour rotatif,
- un ou plusieurs dispositifs à pression (104, 104A ; 104B) conçus pour appliquer d'abord une dépression et appliquer ensuite une surpression au niveau des ouvertures à pression de chaque moule femelle,
- un premier dispositif d'alimentation en film (106) conçu pour disposer un premier matériau de film (111) sur la surface supérieure de chaque moule femelle, le premier matériau de film étant destiné à être aspiré à l'intérieur des moules femelles par la dépression, formant ainsi une cavité de capsule (125),
- un dispositif d'alimentation en détergent (160) conçu pour remplir au moins partiellement chaque cavité de capsule avec un détergent,
- un deuxième dispositif d'alimentation en film (107) conçu pour disposer un deuxième matériau de film (112) sur le premier matériau de film,
- un dispositif de liaison (109) conçu pour lier le deuxième matériau de film au premier matériau de film dans chaque zone de liaison (110) qui s'étend autour de l'ouverture de moule (25) de chaque moule femelle,
- un dispositif de séparation (166) conçu pour séparer les unes des autres les capsules de détergent formées.

9. Dispositif selon la revendication précédente, dans lequel le dispositif à pression est conçu pour créer une surpression au niveau des ouvertures à pression afin d'éjecter les capsules formées des cavités de moule.

10. Dispositif selon la revendication 8 ou 9, le dispositif ne comprenant aucun autre moyen pour décharger les capsules formées des moules hormis le dispositif à pression.

11. Dispositif selon l'une quelconque des revendications 8 à 10, comprenant une unité de commande (300) conçue pour commander les diverses parties du dispositif afin de réaliser le cycle suivant :
- positionnement du premier matériau de film sur la surface supérieure avec le premier dispositif d'alimentation en film,
- création d'une dépression au niveau des ouvertures à pression avec le dispositif à pression et aspiration du premier matériau de film à l'intérieur de l'au moins une cavité de moule jusqu'à ce que le premier matériau de film entre en contact avec au moins une portion de la paroi de moule de chaque moule femelle, formant ainsi au moins une cavité de capsule,
- remplissage au moins partiel de l'au moins une cavité de capsule avec un premier détergent par le dispositif d'alimentation en détergent,
- positionnement du deuxième matériau de film sur le premier matériau de film avec le deuxième dispositif d'alimentation en film,
- liaison du deuxième matériau de film au premier matériau de film avec le dispositif de liaison dans une zone de liaison qui s'étend au moins autour de la circonférence de l'ouverture de moule,
- découpe des premier et deuxième films autour de la zone de liaison avec le dispositif de découpe, ce qui forme ainsi les capsules de détergent,
- application d'une surpression au niveau des ouvertures à pression avec le dispositif à pression, et déchargement des capsules de détergent formées des moules femelles.

12. Procédé de fabrication d'une capsule de détergent (100), le procédé comprenant :
- le positionnement d'un premier matériau de film (111) sur la surface supérieure d'un moule femelle selon l'une quelconque des revendications 1 à 7,
- le déplacement du premier matériau de film jusqu'à l'intérieur de la cavité de moule par déformation du premier matériau de film jusqu'à ce que le premier matériau de film entre en contact avec au moins une portion de la paroi de moule du moule femelle, formant ainsi une cavité de capsule, et
- le remplissage au moins partiel de la cavité de capsule avec un premier détergent,
- le positionnement du deuxième matériau de film (112) sur le premier matériau de film,
- la liaison du deuxième matériau de film au premier matériau de film dans une zone de liaison (110) autour de l'ouverture de moule avec le dispositif de liaison,
- le déchargement de la capsule de détergent formée du moule femelle.

13. Procédé selon la revendication précédente, le procédé comprenant :
- l'application d'une différence de pression sur le premier matériau de film afin de déformer le premier matériau de film et déplacer le premier matériau de film jusqu'à l'intérieur du moule, et
- l'application d'une différence de pression opposée sur la capsule de détergent formée pour décharger la capsule de détergent formée du moule femelle.

14. Procédé selon la revendication 12 ou 13, dans lequel les premier et deuxième matériaux de film sont hydrosolubles et sont en particulier constitués de PVOH, et dans lequel le premier matériau de film et/ou le deuxième matériau de film sont mouillés avec un dispositif d'alimentation en liquide avant la liaison du deuxième matériau de film au premier matériau de film.
